# EUROPEAN PATENT APPLICATION

(11) **EP 4 641 446 A1**
(43) Date of publication of application: **29.10.2025**
(21) Application number: 23905276.4
(22) Date of filing: 14.08.2023
(51) Int. Cl.: G06N 3/0464

(54) **NEURAL NETWORK MODEL COMPILATION METHOD AND APPARATUS, AND ELECTRONIC DEVICE AND STORAGE MEDIUM**

(30) Priority: 20.12.2022 CN 202211659819
(71) Applicant: Beijing Horizon Information Technology Co., Ltd., Beijing 100094 (CN)
(72) Inventor: ZOU, Liang, Beijing 100094 (CN)
(74) Representative: Patentanwälte Magenbauer & Kollegen Partnerschaft mbB
(86) International application number: PCT/CN2023/112957
(87) International publication number: WO 2024/131097

(57) **Abstract**

A neural network model compilation method and apparatus, and an electronic device and a storage medium. The method comprises: acquiring a neural network model to be compiled; on the basis of said neural network model, determining an initial computation graph corresponding to said neural network model, wherein the initial computation graph comprises at least one first computation sub-graph; determining from each first computation sub-graph a second computation sub-graph comprising a preset operator node, and dividing the second computation sub-graph into a first number of target computation sub-graphs according to an input tensor of the second computation sub-graph; establishing a dependency relationship between the first number of target computation sub-graphs according to a preset dependency rule, so as to obtain a first dependency graph corresponding to the second computation sub-graph; and on the basis of the first dependency graph corresponding to each second computation sub-graph, generating a target instruction sequence corresponding to said neural network model. The method can be conducive to improving the validity of the degree of parallelism of an instruction sequence, thereby improving the instruction scheduling efficiency.

## Description

### RELATED APPLICATION INFORMATION

This disclosure claims priority to Chinese patent application No. CN202211659819.X, filed with the China National Intellectual Property Administration on December 20, 2022 and entitled "METHOD AND APPARATUS FOR COMPILING NEURAL NETWORK MODEL, ELECTRONIC DEVICE, AND STORAGE MEDIUM", which is incorporated herein by reference in its entirety.

### FIELD OF THE INVENTION

This disclosure relates to artificial intelligence (AI) technology, and in particular, to a method and apparatus for compiling a neural network model, an electronic device, and a storage medium.

### BACKGROUND OF THE INVENTION

With rapid development of artificial intelligence (AI) technology, in a scenario such as autonomous driving, etc., the requirements on a speed of neural network model training or inference processing are increasingly higher. To reduce time of training or inference, an AI chip puts a certain requirement for a neural network compiler, where it is generally needed to partition an input tensor for an operator node in a computation graph of the neural network model in the process of compiling a neural network model, so as to be allocated to a plurality of computing units for execution.

### SUMMARY OF THE INVENTION

Embodiments of this disclosure provide a method and apparatus for compiling a neural network model, an electronic device, and a storage medium.

Based on an aspect of embodiments of this disclosure, there is provided a method for compiling a neural network model, including: acquiring a neural network model to be compiled; determining, based on the neural network model to be compiled, an initial computation graph corresponding to the neural network model to be compiled, where the initial computation graph includes one or more first computation sub-graphs each including one or more operator nodes and connection relationships between the respective operator nodes; determining, from the respective first computation sub-graphs, a second computation sub-graph including a preset operator node, and partitioning, based on an input tensor for the second computation sub-graph, the second computation sub-graph into a first number of target computation sub-graphs; establishing, based on a preset dependency rule, dependency relationships between the first number of target computation sub-graphs, to obtain a first dependency graph corresponding to the second computation sub-graph, the dependency relationship representing a computation order among the target computation sub-graphs; and generating, based on the first dependency graphs corresponding respectively to the respective second computation sub-graphs, a target instruction sequence corresponding to the neural network model to be compiled.

Based on another aspect of embodiments of this disclosure, there is provided an apparatus for compiling a neural network model, including: a first acquisition module, configured to acquire a neural network model to be compiled; a first processing module, configured to determine, based on the neural network model to be compiled, an initial computation graph corresponding to the neural network model to be compiled, where the initial computation graph includes one or more first computation sub-graphs each including one or more operator nodes and connection relationships between the respective operator nodes; a second processing module, configured to: determine, from the respective first computation sub-graphs, a second computation sub-graph including a preset operator node, and partition, based on an input tensor for the second computation sub-graph, the second computation sub-graph into a first number of target computation sub-graphs; a third processing module, configured to establish, based on a preset dependency rule, dependency relationships between the first number of target computation sub-graphs, to obtain a first dependency graph corresponding to the second computation sub-graph, the dependency relationship representing a computation order among the target computation sub-graphs; and a fourth processing module, configured to generate, based on first dependency graphs corresponding respectively to respective second computation sub-graphs, a target instruction sequence corresponding to the neural network model to be compiled.

Based on yet another aspect of embodiments of this disclosure, there is provided a computer readable storage medium, on which a computer program is stored, where the computer program is configured for implementing the method for compiling a neural network model according to any one of embodiments of this disclosure.

Based on still another aspect of embodiments of this disclosure, an electronic device, there is provided the electronic device, including: a processor; and a memory configured to store processor-executable instructions, where the processor is configured to read the executable instructions from the memory, and execute the instructions to implement the method for compiling a neural network model according to any one of embodiments of this disclosure.

Based on yet another aspect of embodiments of this disclosure, there is provided a computer program product, where when instructions in the computer program product are executed by a processor, the method for compiling a neural network model according to any one of embodiments of this disclosure is implemented.

Based on a method and apparatus for compiling a neural network model, an electronic device, and a storage medium according to embodiments of this disclosure, a second computation sub-graph in the initial computation graph corresponding to the neural network model to be compiled that includes a preset operator node is partitioned, and then dependency relationships between target computation sub-graphs obtained from partitioning is established, for controlling the computation order among the target computation sub-graphs; it is thereby enabled to balance parallelism and resource occupation in computations of the target computation sub-graphs, such that instruction scheduling is enabled to be performed on the generated instruction sequence with effective parallelism, which enables instruction scheduling resource occupation to leave an available storage resource for subsequent processing, which helps reduce occurrence of resource insufficiency in subsequent processing for the target computation sub-graphs caused by ahead-of-time resource occupation due to excessively high parallelism of the target computation sub-graphs, and helps improve efficiency of instruction scheduling.

A technical solution of this disclosure further is elaborated below using accompanying drawings and embodiments.

### BRIEF DESCRIPTION OF THE DRAWINGS

FIG. 1 is an exemplary scenario of application of a method for compiling a neural network model according to this disclosure.
FIG. 2 is a flowchart of a method for compiling a neural network model according to an exemplary embodiment of this disclosure.
FIG. 3 is a schematic diagram of a first computation sub-graph according to an exemplary embodiment of this disclosure.
FIG. 4 is a schematic diagram of a partitioning principle for a second computation sub-graph according to an exemplary embodiment of this disclosure.
FIG. 5 is a flowchart of a method for compiling a neural network model according to another exemplary embodiment of this disclosure.
FIG. 6 is a schematic diagram of a first dependency graph according to an exemplary embodiment of this disclosure.
FIG. 7 is a flowchart of a method for compiling a neural network model according to yet another exemplary embodiment of this disclosure.
FIG. 8 is a schematic diagram of a first dependency graph according to another exemplary embodiment of this disclosure.
FIG. 9 is a schematic diagram of a scheduling sliding window according to an exemplary embodiment of this disclosure.
FIG. 10 is a flowchart of a method for compiling a neural network model according to still another exemplary embodiment of this disclosure.
FIG. 11 is a schematic diagram of a partitioning principle corresponding to an operation type of matrix multiplication according to an exemplary embodiment of this disclosure.
FIG. 12 is a schematic diagram of a structure of an apparatus for compiling a neural network model according to an exemplary embodiment of this disclosure.
FIG. 13 is a schematic diagram of a structure of an apparatus for compiling a neural network model according to an exemplary embodiment of this disclosure.
FIG. 14 is a schematic diagram of a structure of an application embodiment of an electronic device according to this disclosure.

### DETAILED DESCRIPTION OF THE EMBODIMENTS

To explain this disclosure, exemplary embodiments of this disclosure are elaborated below with reference to accompanying drawings. Clearly, the embodiments described are merely some, rather than all, of embodiments of this disclosure. It should be understood that this disclosure is not limited to the exemplary embodiments.

It should be noted that unless otherwise specified, the scope of this disclosure is not limited to relative arrangements, numeric expressions, and numerical values of components and steps described in these embodiments.

### Overview of Disclosure

In implementing this disclosure, the inventor discovers that with rapid development of artificial intelligence (AI) technology, in a scenario such as autonomous driving, etc., the requirement on a speed of neural network model training or inference processing is increasingly higher. To reduce time of training or inference, an AI chip puts a certain requirement for a neural network compiler, where it is generally needed to partition an input tensor for an operator node in a computation graph of the neural network model in a process of compiling a neural network model, so as to be allocated to a plurality of computing units for execution. If there are a great number of computation sub-graphs after the partitioning, when scheduling instructions, instruction sequences of all the computation sub-graphs may be scheduled in parallel, leading to excessively high parallelism in data loading stages of the computation sub-graphs, and ahead-of-time resource occupation, such that there are insufficient processing resources for subsequent stages of the computation sub-graphs, impacting efficiency of instruction scheduling.

### Exemplary Overview

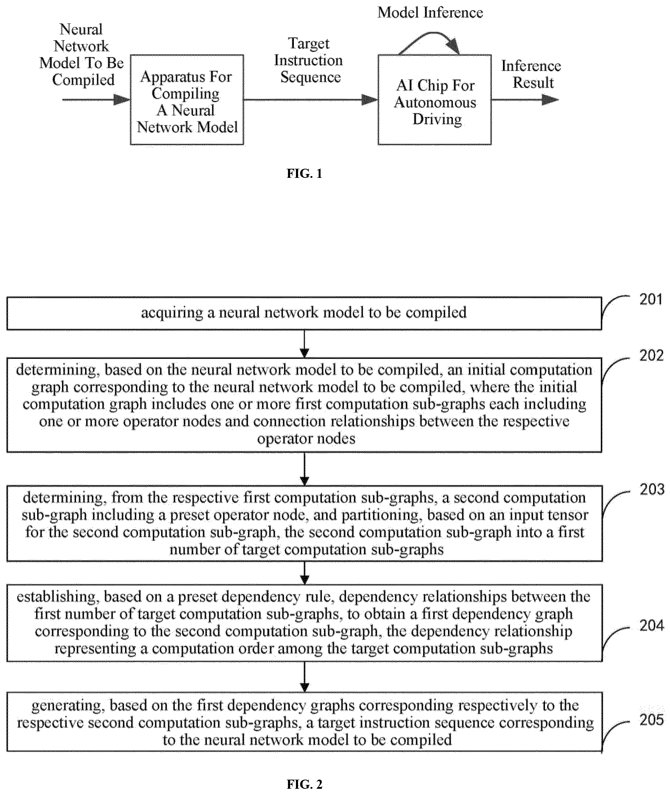

FIG. 1 is an exemplary scenario of application of a method for compiling a neural network model according to this disclosure.

In a scenario of autonomous driving, using the method for compiling a neural network model according to this disclosure (implemented at an apparatus for compiling a neural network model), an initial computation graph corresponding to a neural network model to be compiled may be determined based on the neural network model to be compiled, where the initial computation graph may include one or more first computation sub-graphs, and each first computation sub-graph may include one or more operator nodes and connection relationships between the respective operator nodes; a second computation sub-graph including a preset operator node among the respective first computation sub-graphs may be determined based on the initial computation graph, and the second computation sub-graph may be partitioned into a first number of target computation sub-graphs based on an input tensor for the second computation sub-graph; dependency relationships between the first number of target computation sub-graphs may be established based on a preset dependency rule, to obtain a first dependency graph corresponding to the second computation sub-graph, where the dependency relationship may represent a computation order among the target computation sub-graphs; and then, based on first dependency graphs corresponding respectively to the second computation sub-graphs, a target instruction sequence corresponding to the neural network model to be compiled may be generated for an AI chip for autonomous driving, to perform model inference for respective functions such as target detection, semantic segmentation, etc., where an obtained inference result may be used for decision-making and planning for autonomous driving. As the dependency relationships between the target computation sub-graphs are established for controlling the computation order among the target computation sub-graphs, it is thereby enabled to balance parallelism and resource occupation in computations of the target computation sub-graphs, such that instruction scheduling is enabled to be performed on the generated instruction sequence with effective parallelism, which enables instruction scheduling resource occupation to leave an available storage resource for subsequent processing, which helps reduce occurrence of resource insufficiency in subsequent processing for the target computation sub-graphs caused by ahead-of-time resource occupation due to excessively high parallelism of the target computation sub-graphs, and helps improve efficiency of instruction scheduling.

In addition to being applicable to the scenario of autonomous driving, the method for compiling a neural network model according to embodiments of this disclosure, further may be applied to any other scenario where input tensor partitioning is needed, for example may be applied to a scenario where image processing is needed, such as a scenario of an access control system based on image recognition, a scenario of medical image processing, etc., which specifically may be set as needed.

### Exemplary Method

FIG. 2 is a flowchart of a method for compiling a neural network model according to an exemplary embodiment of this disclosure. The embodiment may apply to an electronic device, specifically to a server or a terminal, for example. As shown in FIG. 2, this embodiment may include steps as follows.

Step 201, acquiring a neural network model to be compiled

The neural network model to be compiled (which may be referred to as model for short in embodiments of this disclosure) may be any pre-trained neural network model, such as a target detection model, a semantic segmentation model, etc., which is not limited in embodiments of this disclosure.

In an optional example, step 201 may be executed by a processor by invoking respective instructions stored in a memory, or executed by a first acquisition module run by a processor.

Step 202, determining, based on the neural network model to be compiled, an initial computation graph corresponding to the neural network model to be compiled, where the initial computation graph includes one or more first computation sub-graphs each including one or more operator nodes and connection relationships between the respective operator nodes

An operator node may include a data loading node for loading data to be used by the data computing node, such as a tensor, a weight, etc; a data computing node including operators for various computations in the model, for example operators for computations such as matrix multiplication, convolution, element-wise addition, pooling, element-wise multiplication, etc; and a data storing node for storing a computing result of the data computing node. A first computation sub-graph is a graphical representation describing a computation order among a group of operator nodes constituted by the data loading node, the data computing node, and the data storing node. The initial computation graph may include an overall graphical representation of the respective first computation sub-graphs in the neural network model to be compiled. For example, any one computation operator (such as convolution) in the neural network model to be compiled may correspond to one first computation sub-graph including a data loading node corresponding to the computation operator, a data computing node corresponding to the computation operator, and a data storing node corresponding to the computation operator.

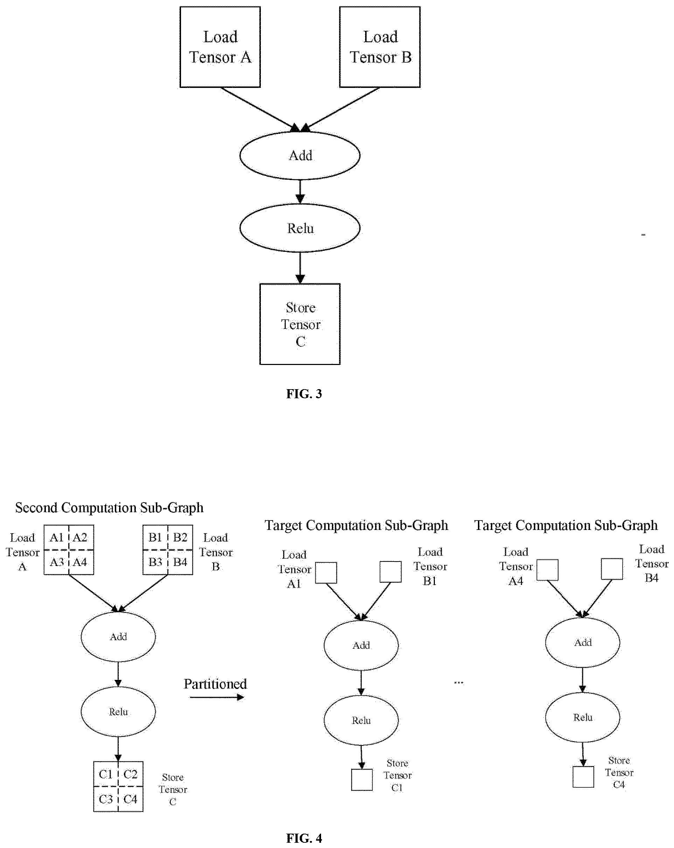

Exemplarily, FIG. 3 is a schematic diagram of a first computation sub-graph according to an exemplary embodiment of this disclosure. Load Tensor A represents loading a tensor A, which belongs to a data loading node; Load Tensor B represents loading a tensor B, which belongs to a data loading node; Add represents element-wise addition of two tensors, which belongs to a data computing node; Relu represents an activation function, for activating a result of element-wise addition to obtain a tensor C, which also belongs to a data computing node; Store Tensor C represents storing the tensor C, which belongs to a data storing node.

In an optional example, step 202 may be executed by a processor by invoking respective instructions stored in a memory, or executed by a first processing module run by a processor.

Step 203, determining, from the respective first computation sub-graphs, a second computation sub-graph including a preset operator node, and partitioning, based on an input tensor for the second computation sub-graph, the second computation sub-graph into a first number of target computation sub-graphs.

A preset operator node may be an operator node capable of partitioning a tensor based on computation characteristics, and may be set as needed. For example, a preset operator node may include an operator node for element-wise addition, an operator node for matrix multiplication, an operator node for convolution, an operator node for pooling, an operator node for element-wise multiplication, etc. A first computation sub-graph that includes the preset operator node is determined as a second computation sub-graph. The first number may be set as needed. For example, for the operator node for element-wise addition as well as an operator node for element-wise multiplication, the first number may be determined based on a case of a computing unit in the AI chip that can be used for the computation. For example, the first number may be set to be 2, 4, 8, etc. A target computation sub-graph and a first computation sub-graph have consistent overall logic, with just different sizes of tensors for computation.

Exemplarily, FIG. 4 is a schematic diagram of a partitioning principle for a second computation sub-graph according to an exemplary embodiment of this disclosure. This example again takes the operator node for element-wise addition as an example, and if the first number is 4, a second computation sub-graph is partitioned into 4 target computation sub-graphs. The tensor A is partitioned, by a broken line, into four sub-tensors A1, A2, A3, and A4; and the tensor B is partitioned into four sub-tensors B1, B2, B3, and B4. Based on computation characteristics of element-wise addition, the tensor A and the tensor B are identical in size, and the tensor A and the tensor B are to be partitioned in the same mode of partitioning, so that sub-tensors Ai and Bi obtained by partitioning respectively belong to identical locations in A and B, i=1,2,3,4, thereby making the sub-tensors Ai and Bi obtained by partitioning be of the same size. The tensor C computed using the tensor A and the tensor B is partitioned into four sub-tensors C1, C2, C3, and C4. The tensor C also is to be partitioned based on the computation characteristics of element-wise addition, in the same mode of partitioning in which the tensor A and the tensor B are partitioned. The target computation sub-graphs are respectively responsible for computation of element-wise addition of two sub-tensors (such as A1 and B1) at corresponding locations, and obtaining a resulting tensor (C1) at a corresponding location by activation.

In an optional example, based on different computation characteristics of different operator nodes, partitioning of the tensor A, the tensor B, and the tensor C may have to meet different conditions. For example, the operator node for matrix multiplication differs from the operator node for element-wise addition as described above in terms of computation characteristics, where a sum of products of a respective row of elements in the tensor A and a respective column of elements in the tensor B is implemented by matrix multiplication, then, the tensor A may be partitioned row-wise, the tensor B may be partitioned column-wise, and a number of rows of a sub-tensor partitioned from the tensor A is same as a number of columns of a sub-tensor partitioned from the tensor B. The partitioning of the tensor C may be performed according to a location in the tensor C corresponding to a operating result of the sub-tensors obtained by partitioning the tensor A and the tensor B, which specifically may be set as needed.

In an optional example, step 203 may be executed by a processor by invoking respective instructions stored in a memory, or executed by a second processing module run by a processor.

Step 204, establishing, based on a preset dependency rule, dependency relationships between the first number of target computation sub-graphs, to obtain a first dependency graph corresponding to the second computation sub-graph, the dependency relationship representing a computation order among the target computation sub-graphs.

The preset dependency rule may be set as needed, specifics of which are not limited, as long as it is enabled to establish the dependency relationships between the target computation sub-graphs. The dependency relationships between the target computation sub-graphs represent the computation order among the target computation sub-graphs, which thereby helps avoid instruction scheduling being trapped by a greedy trap caused by excessively high false parallelism. For example, instruction scheduling in related art aims to seek higher parallelism under a limited resource condition. If the computation order among the target computation sub-graphs is not established, when scheduling instructions, the tensors A1, A2, A3, A4, B1, B2, B3, and B4 may be loaded with no data dependency, and all may be loaded ahead of time. Too early execution of these operations may occupy a high-speed storage resource, a lot of time also may be spent for a scheduler to discriminate these invalid attempts, greatly lowering a scheduling speed; and as the storage resource is occupied ahead of time, this also easily leads to occurrence of insufficient storage resources for subsequent processing. With embodiments of this disclosure, the dependency relationships between the target computation sub-graphs is established, which enables to help reduce invalid operation ahead-of-time execution, which thereby helps improve scheduling efficiency.

Exemplarily, the computation order among the target computation sub-graphs may be determined randomly. Alternatively, the computation order among the target computation sub-graphs may be determined based on another rule. For example, it is defined that parallel processing of just some, such as 2, of the target computation sub-graphs is allowed at the same time, and that loading of data for a new target computation sub-graph is not allowed to start until either of the target computation sub-graphs is completed, so as to avoid resource occupation by parallel loading of data for a plurality of target computation sub-graphs, with a specific rule thereof not limited.

In an optional example, step 204 may be executed by a processor by invoking respective instructions stored in a memory, or executed by a third processing module run by a processor.

Step 205, generating, based on the first dependency graphs corresponding respectively to the respective second computation sub-graphs, a target instruction sequence corresponding to the neural network model to be compiled.

The target instruction sequence is a compiled binary code sequence corresponding to the neural network model to be compiled. The target instruction sequence may be deployed to the AI chip to implement a corresponding inference function of the neural network model to be compiled, such as for target detection, semantic segmentation, etc. The AI chip may schedule and execute respective instructions based on the target instruction sequence, implementing respective functions.

In an optional example, step 205 may be executed by a processor by invoking respective instructions stored in a memory, or executed by a fourth processing module run by a processor.

With the method for compiling a neural network model according to this embodiment, when partitioning for a second computation sub-graph including a preset operator node in the initial computation graph corresponding to the neural network model to be compiled is performed, dependency relationships between target computation sub-graphs obtained from partitioning is established, for controlling the computation order among the target computation sub-graphs; it is thereby enabled to balance parallelism and resource occupation in computations of the target computation sub-graphs, such that instruction scheduling is enabled to be performed on the generated instruction sequence with effective parallelism, which enables instruction scheduling resource occupation to leave an available storage resource for subsequent processing, which helps reduce occurrence of resource insufficiency in subsequent processing for the target computation sub-graphs caused by ahead-of-time resource occupation due to excessively high parallelism of the target computation sub-graphs, and helps improve efficiency of instruction scheduling.

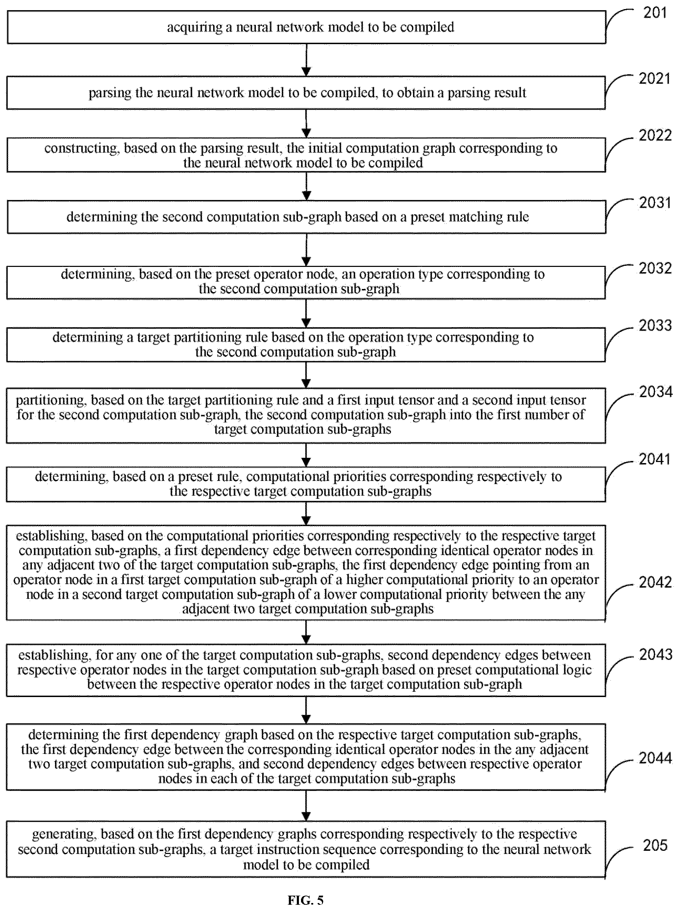

FIG. 5 is a flowchart of a method for compiling a neural network model according to another exemplary embodiment of this disclosure.

In an optional embodiment, step 204 specifically may include steps as follows.

Step 2041, determining, based on a preset rule, computational priorities corresponding respectively to the respective target computation sub-graphs.

The preset rule may be set as needed. For example, the computational priorities corresponding respectively to the respective target computation sub-graphs are determined randomly, or determined based on a sequence of sub-tensors obtained by partitioning a tensor. For example, a target computation sub-graph corresponding to the foregoing A1, B1 corresponds to a highest computational priority, followed by a computational priority corresponding to a target computation sub-graph corresponding to A2, B2, and so forth. Specifics thereof are not limited.

In an optional example, step 2041 may be executed by a processor by invoking respective instructions stored in a memory, or executed by a first determination unit run by a processor.

Step 2042, establishing, based on the computational priorities corresponding respectively to the respective target computation sub-graphs, a first dependency edge between corresponding identical operator nodes in any adjacent two of the target computation sub-graphs, the first dependency edge pointing from an operator node in a first target computation sub-graph of a higher computational priority to an operator node in a second target computation sub-graph of a lower computational priority between the any adjacent two target computation sub-graphs.

The first dependency edge represents dependency of a computation order between the corresponding identical operator nodes in the adjacent two target computation sub-graphs. An instruction for the operator node to which the first dependency edge points may be executed just after an instruction for the starting node of the first dependency edge has been executed.

In an optional example, step 2042 may be executed by a processor by invoking respective instructions stored in a memory, or executed by a first processing unit run by a processor.

Step 2043, establishing, for any one of the target computation sub-graphs, second dependency edges between respective operator nodes in the target computation sub-graph based on preset computational logic between the respective operator nodes in the target computation sub-graph.

For the target computation sub-graph, referring to FIG. 4, there may be certain computational logic between the respective operator nodes in the target computation sub-graph, where the second dependency edge represents dependency of a computation order between respective operator nodes in the same target computation sub-graph, with a principle similar to that for the first dependency edge.

In an optional example, step 2043 may be executed by a processor by invoking respective instructions stored in a memory, or executed by a second processing unit run by a processor.

Step 2044, determining the first dependency graph based on the respective target computation sub-graphs, the first dependency edge between the corresponding identical operator nodes in the any adjacent two target computation sub-graphs, and second dependency edges between respective operator nodes in each of the target computation sub-graphs.

The first dependency graph may include the dependency between adjacent target computation sub-graphs among the target computation sub-graphs obtained by partitioning the second computation sub-graph corresponding to the first dependency graph, as well as the dependency inside the respective target computation sub-graphs.

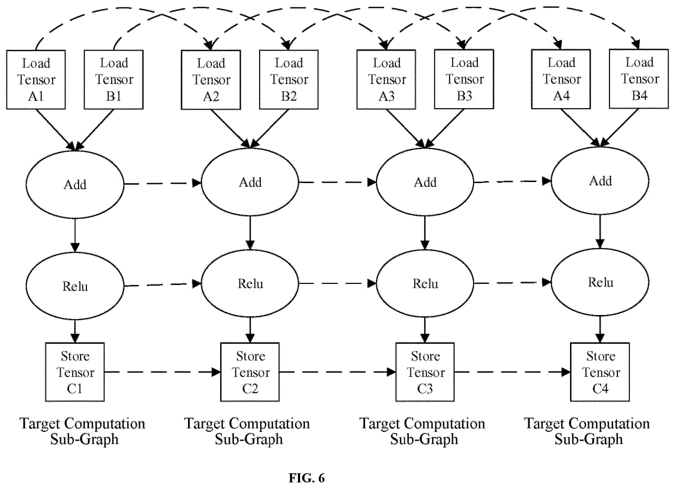

Exemplarily, FIG. 6 is a schematic diagram of a first dependency graph according to an exemplary embodiment of this disclosure. This example again takes the foregoing operator node for element-wise addition as an example, where a broken-line arrow represents a first dependency edge between adjacent two target computation sub-graphs, and a solid-line arrow represents a second dependency edge inside a target computation sub-graph.

In an optional example, step 2044 may be executed by a processor by invoking respective instructions stored in a memory, or executed by a third processing unit run by a processor.

With this embodiment, a first dependency edge between target computation sub-graphs and a second dependency edge inside a target computation sub-graph are established, for representing dependency of a computation order between respective operator nodes, which helps avoid occurrence of scheduling of high false parallelism, which thereby enables to greatly improve efficiency of instruction scheduling.

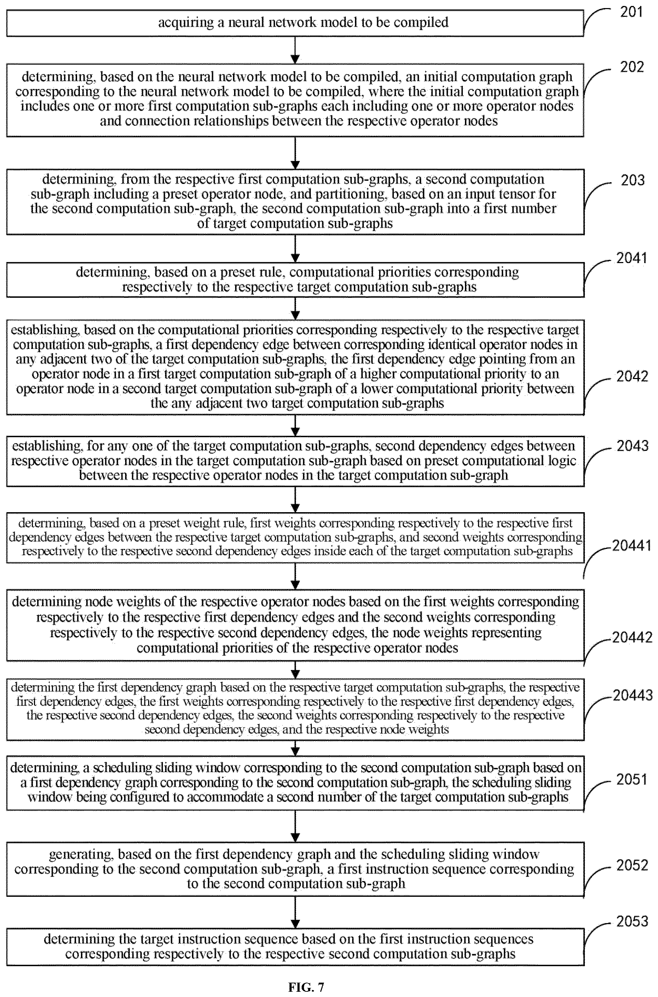

FIG. 7 is a flowchart of a method for compiling a neural network model according to yet another exemplary embodiment of this disclosure.

In an optional embodiment, step 2044 of determining the first dependency graph based on the respective target computation sub-graphs, the first dependency edge between the corresponding identical operator nodes in the any adjacent two target computation sub-graphs, and second dependency edges between respective operator nodes in each of the target computation sub-graphs includes steps as follows.

Step 20441, determining, based on a preset weight rule, first weights corresponding respectively to the respective first dependency edges between the respective target computation sub-graphs, and second weights corresponding respectively to the respective second dependency edges inside each of the target computation sub-graphs.

The preset weight rule may be set as needed. For example, a large weight is set for a first dependency edge, for example, a first weight is set to be 100, and a small weight is set for a second dependency edge, for example, a second weight is set to be 1, which specifically may be set as needed.

In an optional example, step 20441 may be executed by a processor by invoking respective instructions stored in a memory, or executed by the third processing unit run by a processor.

Step 20442, determining node weights of the respective operator nodes based on the first weights corresponding respectively to the respective first dependency edges and the second weights corresponding respectively to the respective second dependency edges, the node weights representing computational priorities of the respective operator nodes.

For any one second computation sub-graph, a node weight of an ending operator node to which is finally pointed may be set to be a reference value (such as 0) based on pointing directions of all of the first dependency edges and the second dependency edges, where a node weight of a starting operator node connected by a first dependency edge or a second dependency edge pointing to the ending operator node is determined based on the first dependency edge or the second dependency edge pointing to the ending operator node, and so forth, until node weights of all of the operator nodes are obtained.

In an optional example, step 20442 may be executed by a processor by invoking respective instructions stored in a memory, or executed by the third processing unit run by a processor.

Step 20443, determining the first dependency graph based on the respective target computation sub-graphs, the respective first dependency edges, the first weights corresponding respectively to the respective first dependency edges, the respective second dependency edges, the second weights corresponding respectively to the respective second dependency edges, and the respective node weights

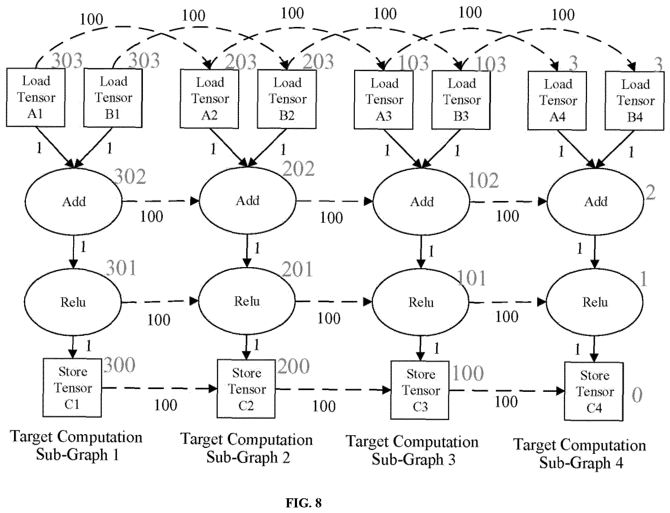

Exemplarily, FIG. 8 is a schematic diagram of a first dependency graph according to another exemplary embodiment of this disclosure. Starting from an operator node Store Tensor C4 at a lower right corner, a node weight (grey number) of the operator node may be set to be a reference value 0, a first weight corresponding to a first dependency edge may be set to be 100, a second weight corresponding to a second dependency edge may be set to be 1, and a node weight of another operator node may be obtained based on a sum of a first weight of a first dependency edge depending on the another operator node and a node weight of an operator node to which the first dependency edge points, or obtained based on a sum of a second weight of a second dependency edge depending on the another operator node and a node weight of an operator node to which the second dependency edge points. For example, a node weight of an operator node Store Tensor C3 is a sum of the node weight of the node Store Tensor C4 and a first weight of a first dependency edge between the two nodes. Therefore, the node weight of the node Store Tensor C3 is 100. As another example, a node weight of an operator node Add in a target computation sub-graph 3 is a sum (102) of a node weight (101) of an operator node Relu depending on the operator node Add and a second weight (1) of a second dependency edge between the two nodes, and the node weight of the node Add also is a sum (102) of a node weight (2) of an operator node Add in a target computation sub-graph 4 depending on the node Add and a first weight (100) of a first dependency edge between the two nodes. Analogously, node weights of operator nodes are obtained as shown in the figure. In actual application, a node weight may be determined also by using another first weight and another second weight, or based on another node weight rule, as long as it is enabled to represent a computation order between the respective operator nodes as needed, which specifically may be set as needed.

In an optional example, the respective first weights for the respective first dependency edges also may be set to be different or partly different values. For example, respective first weights for respective first dependency edges between a target computation sub-graph 1 and a target computation sub-graph 2 may differ from respective first weights for respective first dependency edges between the target computation sub-graph 2 and the target computation sub-graph 3, which specifically may be set as needed.

In an optional example, the respective second weights for the respective second dependency edges also may be set to be different or partly different values. For example, respective second weights of respective second dependency edges of the target computation sub-graph 1 may differ from respective second weights of respective second dependency edges of the target computation sub-graph 2, which specifically may be set as needed.

In an optional example, in determining a node weight of any one operator node other than the operator node for which the reference value is set, a sum of a first weight of a first dependency edge depending on the operator node and a node weight of an operator node to which the first dependency edge points may be set to be a first result, and a sum of a second weight of a second dependency edge depending on the operator node and a node weight of an operator node to which the second dependency edge points may be set to be a second result. If the first result and the second result differ, a maximal value of the first result and the second result may be set to be the node weight of the operator node. For example, second weights of second dependency edges of the target computation sub-graph 4 in FIG. 8 are set to be 1, and second weights of second dependency edges of the target computation sub-graph 3 are set to be 2. Then, for the operator node Add in the target computation sub-graph 3, as the sum of the node weight (102) of the operator node Relu depending on the operator node Add and the second weight (2) of the second dependency edge between the two nodes is 104, and the sum of the node weight (2) of the operator node Add in the target computation sub-graph 4 depending on the operator node Add and the first weight (100) of the first dependency edge between the two nodes is 102, which is less than104, the node weight of the operator node Add in the target computation sub-graph 3 may be determined to be 104.

In an optional example, step 20443 may be executed by a processor by invoking respective instructions stored in a memory, or executed by the third processing unit run by a processor.

With this embodiment, for possible unfairness in the dependency graph in FIG. 6, a node weight corresponding to an operator node is determined using a first weight corresponding to a first dependency edge and a second weight corresponding to a second dependency edge, which enables to help control parallel execution of adjacent target computation sub-graphs. Unfairness for example lies in that: if a tensor A is small, and a tensor B is large, a computing speed of Add is low; in executing Add of a first target computation sub-graph, a scheduler may face a problem of whether to schedule loading, in idle time, of tensors A2, A3, and A4, or even loading of tensors B2, B3, and B4; clearly, it will be a long time before these tensors are used; for example, A4 and B4 will be used just when the fourth Add is computed, and therefore there is still a possibility of ahead-of-time resource occupation. Referring to FIG. 8, a first weight of a first dependency edge between target computation sub-graphs is set to be a great value, such that node weights of operator nodes of the adjacent target computation sub-graphs are enabled to be located at different levels (such as a level 200 and a level 300), which thereby enables to limit a number of target computation sub-graphs that can be executed in parallel by controlling a number of levels that can be executed in parallel or controlling a node weight threshold, which helps avoid occurrence of the possible unfairness as described above, and further improve scheduling efficiency.

In an optional embodiment, step 205 of generating, based on the first dependency graphs corresponding respectively to the respective second computation sub-graphs, a target instruction sequence corresponding to the neural network model to be compiled includes steps as follows.

Step 2051, determining, for each of the second computation sub-graphs, a scheduling sliding window corresponding to the second computation sub-graph, based on a first dependency graph corresponding to the second computation sub-graph, the scheduling sliding window being configured to accommodate a second number of the target computation sub-graphs.

The second number may be set as needed, such as to be 2, 3, etc. The scheduling sliding window is configured to control a number of target computation sub-graphs that may be scheduled in parallel at the same moment. For example, when there are 4 target computation sub-graphs, if the second number is set to be 2, just two target computation sub-graphs can be processed in parallel at the same moment. When scheduling of instructions corresponding to a first target computation sub-graph in the scheduling sliding window are completed, the sliding window slides, such that the scheduled target computation sub-graph moves out of the window, and a subsequent unprocessed target computation sub-graph moves into the window, which enables to help avoid occurrence of excessively high false parallelism while guaranteeing certain parallelism, which thereby helps further improve efficiency of instruction scheduling.

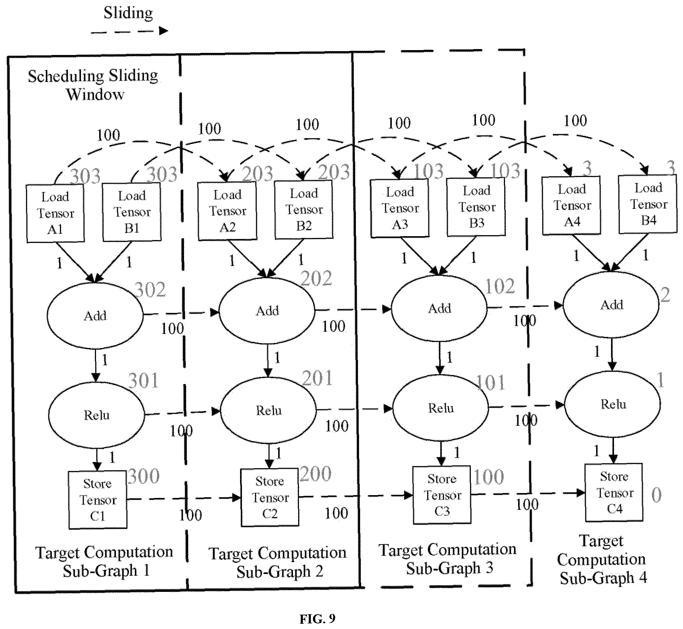

Exemplarily, FIG. 9 is a schematic diagram of a scheduling sliding window according to an exemplary embodiment of this disclosure. At a certain moment, the scheduling sliding window (solid-line rectangular box) includes the target computation sub-graph 1 and the target computation sub-graph 2. Once the target computation sub-graph 1 is completed, the sliding window moves to the location of the broken line rectangular box, in which case the scheduling sliding window includes the target computation sub-graph 2 and the target computation sub-graph 3. The sliding of the window may be controlled by the node weight threshold. For example, initially the node weight threshold is set to a value ranging from 100 to 200, such as 150. Window sliding is implemented by reducing the node weight threshold by 100 at a time, which specifically may be set as needed.

In an optional example, step 2051 may be executed by a processor by invoking respective instructions stored in a memory, or executed by a second determination unit run by a processor.

Step 2052, generating, based on the first dependency graph and the scheduling sliding window corresponding to the second computation sub-graph, a first instruction sequence corresponding to the second computation sub-graph.

A first instruction sequence is a binary instruction sequence executable by hardware (such as an AI chip) corresponding to a second computation sub-graph. Specifics of the generation may be implemented by compilation using a respective compiler, which is not elaborated here.

In an optional example, step 2052 may be executed by a processor by invoking respective instructions stored in a memory, or executed by a fourth processing unit run by a processor.

Step 2053, determining the target instruction sequence based on the first instruction sequences corresponding respectively to the respective second computation sub-graphs.

As the initial computation graph corresponding to the neural network model to be compiled generally includes a plurality of first computation sub-graphs, further including, in addition to the foregoing respective second computation sub-graphs, other first computation sub-graphs that do not include the preset operator node. The target instruction sequence may be determined, from the respective first instruction sequences corresponding to the respective second computation sub-graphs by respective logic locations of the respective second computation sub-graphs in the overall computation graph, together with instruction sequences corresponding to the other first computation sub-graphs.

In an optional example, step 2053 may be executed by a processor by invoking respective instructions stored in a memory, or executed by a third determination unit run by a processor.

With this embodiment, the number of target computation sub-graphs that may be scheduled in parallel at the same moment is controlled using the scheduling sliding window, which enables to help reduce occurrence of excessively high false parallelism while guaranteeing certain parallelism, which further improves efficiency of instruction scheduling.

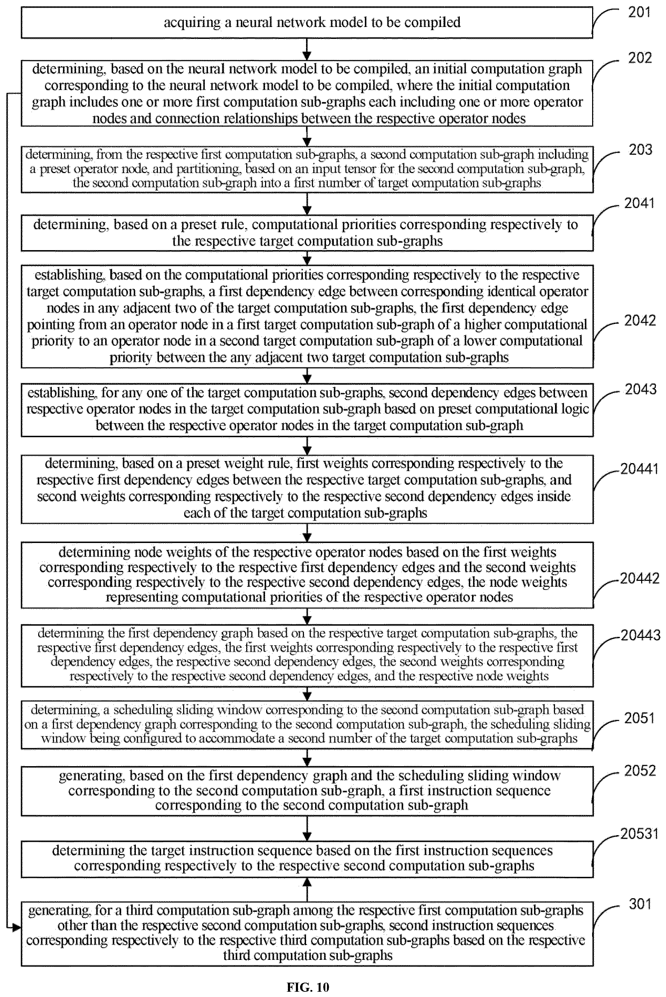

FIG. 10 is a flowchart of a method for compiling a neural network model according to still another exemplary embodiment of this disclosure.

In an optional embodiment, after the step 202 of determining, based on the neural network model to be compiled, an initial computation graph corresponding to the neural network model to be compiled the method further includes a step as follows.

Step 301, generating, for a third computation sub-graph among the respective first computation sub-graphs other than the respective second computation sub-graphs, second instruction sequences corresponding respectively to the respective third computation sub-graphs based on the respective third computation sub-graphs

As a second computation sub-graph is a first computation sub-graph that includes the preset operator node, in addition to which there further may be a first computation sub-graph that does not include the preset operator node. Such a first computation sub-graph that does not include the preset operator node is set to be a third computation sub-graph, and a second instruction sequence corresponding to the third computation sub-graph is generated based on the third computation sub-graph, specifically based on the computational logic between respective operator nodes in the third computation sub-graph, which is not elaborated here.

In an optional example, step 301 may be executed by a processor by invoking respective instructions stored in a memory, or executed by a fifth processing module run by a processor.

Step 2053 of determining the target instruction sequence based on the first instruction sequences corresponding respectively to the respective second computation sub-graphs includes a step as follows.

Step 20531, determining the target instruction sequence based on the first instruction sequences corresponding respectively to the respective second computation sub-graphs and the second instruction sequences corresponding respectively to the respective third computation sub-graphs

Specifically, instruction scheduling may be performed on the respective first instruction sequences and the respective second instruction sequences based on computational logic between the respective second computation sub-graphs and the respective third computation sub-graphs, to determine the target instruction sequence.

In an optional example, step 2053 may be executed by a processor by invoking respective instructions stored in a memory, or executed by the third determination unit run by a processor.

With this embodiment, the target instruction sequence is determined using the respective first instruction sequences and the respective second instruction sequences, such that when the target instruction sequence is scheduled and executed on a hardware platform, it is enabled to reduce cases of excessively high false parallelism while having certain parallelism, which helps greatly improve efficiency of instruction scheduling.

In an optional example, a flow of compiling a neural network model may include three parts, i.e., computation graph construction, computation graph optimization, and instruction generation. Computation graph construction is constructing a general first intermediate representation based on an input model file, where the first intermediate representation is in form of a graph, corresponding to the initial computation graph as described above according to embodiments of this disclosure. Computation graph optimization is performing graph optimization on the first intermediate representation, to obtain a second intermediate representation in form of a graph, and corresponds to a flow of generating the dependency graph based on the initial computation graph in embodiments of this disclosure. Instruction generation is performing scheduling optimization on the second intermediate representation, to obtain a third intermediate representation of fine granularity, and compiling the third representation to obtain an instruction code to be executed on the hardware platform; and may correspond to a flow of generating the target instruction sequence based on the respective first dependency graphs corresponding to the respective second computation sub-graphs in embodiments of this disclosure. A specific compiler compiling architecture thereof is not limited.

In an optional embodiment, step 202 of determining, based on the neural network model to be compiled, an initial computation graph corresponding to the neural network model to be compiled includes steps as follows.

Step 2021, parsing the neural network model to be compiled, to obtain a parsing result.

Parsing for the neural network model to be compiled may be performed based on a preconfigured parsing rule, or may be also performed using any parser that can be implemented, specifics of which are not limited. For example, a model file of the neural network model to be compiled may be parsed based on the parsing rule to obtain grammar and semantics of the file, and the grammar and semantics are set to be the parsing result. The model file may include a lot of computer programming languages, and may be applied to target recognition, image recognition, image classification, semantic segmentation, speech recognition, etc. A computer coding language may be an application specific coding language as well as a general coding language. For example, in embodiments of this disclosure, a computer programming language may be a neural network specific programming language, which specifically may be set as needed. The neural network specific programming language may be represented by a program code which represents a neural network based on description of a computation graph, and the program code may include a program statement describing the computation graph.

In an optional example, step 2021 may be executed by a processor by invoking respective instructions stored in a memory, or executed by a parsing unit run by a processor.

Step 2022, constructing, based on the parsing result, the initial computation graph corresponding to the neural network model to be compiled.

A program code of the neural network model to be compiled includes a program statement describing the computation graph. Therefore, a computation graph structure corresponding to the initial computation graph may be constructed based on grammar and semantics obtained by parsing the program statement of the neural network model to be compiled, and the initial computation graph may be obtained based on the computation graph structure. The initial computation graph may be a graph of a nested structure containing a complex template, which matches the semantics in the program code of the neural network model to be compiled. Further, the computation graph obtained based on the computation graph structure may be expanded, to obtain a computation graph formed by interconnecting basic units in the program, which is set to be the initial computation graph. The initial computation graph may include a complete process of running the program, and may be translated into an executable instruction sequence. With embodiments of this disclosure, the initial computation graph is optimized based on the method according to embodiments of this disclosure, to obtain a computation graph structure with performance optimized on a target operation platform (i.e., the overall computation graph including the respective first dependency graphs), which helps avoid or reduce occurrence of excessively high false parallelism, while maintaining certain parallelism.

In an optional example, step 2022 may be executed by a processor by invoking respective instructions stored in a memory, or executed by a construction unit run by a processor.

In an optional embodiment, step 203 of determining, from the respective first computation sub-graphs, a second computation sub-graph including a preset operator node, and partitioning, based on an input tensor for the second computation sub-graph, the second computation sub-graph into a first number of target computation sub-graphs includes steps as follows.

Step 2031, determining the second computation sub-graph based on a preset matching rule.

The preset matching rule may be determined based on specifics of the preset operator node. For example, an identifier set of the preset operator node is set; and operator identifiers of the respective first computation sub-graphs may be obtained, and matching with the identifier set of the preset operator node is performed, to determine whether the respective first computation sub-graphs includes the preset operator node, specifics of which are not limited.

In an optional example, step 2031 may be executed by a processor by invoking respective instructions stored in a memory, or executed by a fourth determination unit run by a processor.

Step 2032, determining, based on the preset operator node, an operation type corresponding to the second computation sub-graph.

The operation type may include the foregoing element-wise addition, element-wise multiplication, matrix multiplication, etc.

In an optional example, step 2032 may be executed by a processor by invoking respective instructions stored in a memory, or executed by a fifth determination unit run by a processor.

Step 2033, determining a target partitioning rule based on the operation type corresponding to the second computation sub-graph.

Partitioning rules corresponding to different operation types may be set based on specifics of a hardware processing unit. For example, for operations of element-wise addition and element-wise multiplication, partitioning may be performed, based on demands by any hardware processing unit, as long as the two tensors are partitioned in the same mode. As another example, for an operation of matrix multiplication, two tensors are partitioned in different modes, with one being partitioned row-wise, and the other being partitioned column-wise, such that a result obtained by operation of target computation sub-graphs obtained by partitioning is enabled to be a result identical to that obtained in case of no partitioning.

In an optional example, step 2033 may be executed by a processor by invoking respective instructions stored in a memory, or executed by a sixth determination unit run by a processor.

Step 2034, partitioning, based on the target partitioning rule and a first input tensor and a second input tensor for the second computation sub-graph, the second computation sub-graph into the first number of target computation sub-graphs.

Target partitioning rules for different operation types may be identical or may be different. As a tensor gets smaller after partitioning, data for a target computation sub-graph are enabled to be loaded with reduced time, which enables to enter a subsequent data computing stage in time, improving a resource utilization rate while maintaining certain parallelism.

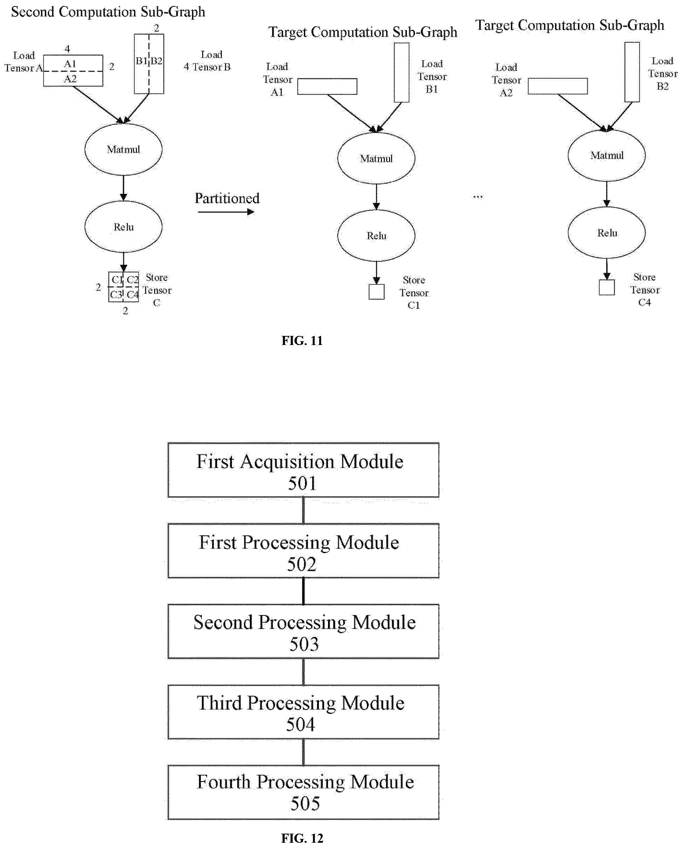

Exemplarily, taking matrix multiplication as an example, FIG. 11 is a schematic diagram of a partitioning principle corresponding to an operation type of matrix multiplication according to an exemplary embodiment of this disclosure. Matmul represents matrix multiplication, a tensor A is a 2×4 tensor, and a tensor B is a 4×2 tensor. The tensor A is partitioned into two 1×4 tensors (A1 and A2), and the tensor B is partitioned into two 4×1 tensors (B1 and B2), to obtain 4 target computation sub-graphs (including target computation sub-graphs corresponding respectively to four groups, i.e., of A1 and B1, of A1 and B2, of A2 and B1, and of A2 and B2). Merging of results obtained using the 4 target computation sub-graphs is exactly the same as a result C of matrix multiplication of A and B, where matrix multiplication of A1 and B1 results in C1, matrix multiplication of A1 and B2 results in C2, matrix multiplication of A2 and B1 results in C3, and matrix multiplication of A2 and B2 results in C4.

In an optional example, step 2034 may be executed by a processor by invoking respective instructions stored in a memory, or executed by a fifth processing unit run by a processor.

Respective embodiments or optional examples of this disclosure may be implemented separately, or in any combination as long as it causes no conflict, specifics of which may be set as needed, and are not limited in this disclosure.

Any one method for compiling a neural network model according to embodiments of this disclosure may be implemented by any appropriate device capable of data processing, including but not limited to a terminal device, a server, etc. Alternatively, the method for compiling a neural network model according to embodiments of this disclosure may be implemented by a processor. For example, the processor implements the method for compiling a neural network model mentioned in embodiments of this disclosure by calling respective instructions stored in a memory, which is not elaborated hereinafter.

A person of ordinary skill in the art may understand that: all or some of the steps implementing a method embodiment as described above may be completed by instructing related hardware using a program; the foregoing program may be stored in a computer readable storage medium, and when executed, executes steps including the method embodiment as described above; and the foregoing storage medium includes various media capable of storing a program code, such as a read-only memory (ROM), a random access memory (RAM), a disk or a compact disk read-only memory (CD-ROM), etc.

### Exemplary Apparatus

FIG. 12 is a schematic diagram of a structure of an apparatus for compiling a neural network model according to an exemplary embodiment of this disclosure. The apparatus of the embodiment may be configured to implement the respective method embodiments of this disclosure. The apparatus as shown in FIG. 12 may include: a first acquisition module 501, a first processing module 502, a second processing module 503, a third processing module 504, and a fourth processing module 505.

The first acquisition module 501 is configured to acquire a neural network model to be compiled.

The first processing module 502 is configured to determine, based on the neural network model to be compiled, an initial computation graph corresponding to the neural network model to be compiled, where the initial computation graph includes one or more first computation sub-graphs each including one or more operator nodes and connection relationships between the respective operator nodes.

The second processing module 503 is configured to: determine, from the respective first computation sub-graphs, a second computation sub-graph including a preset operator node; and partition, based on an input tensor for the second computation sub-graph, the second computation sub-graph into a first number of target computation sub-graphs;

The third processing module 504 is configured to establish, based on a preset dependency rule, dependency relationships between the first number of target computation sub-graphs, to obtain a first dependency graph corresponding to the second computation sub-graph, the dependency relationship representing a computation order among the target computation sub-graphs.

The fourth processing module 505 is configured to generate, based on the first dependency graphs corresponding respectively to the respective second computation sub-graphs, a target instruction sequence corresponding to the neural network model to be compiled.

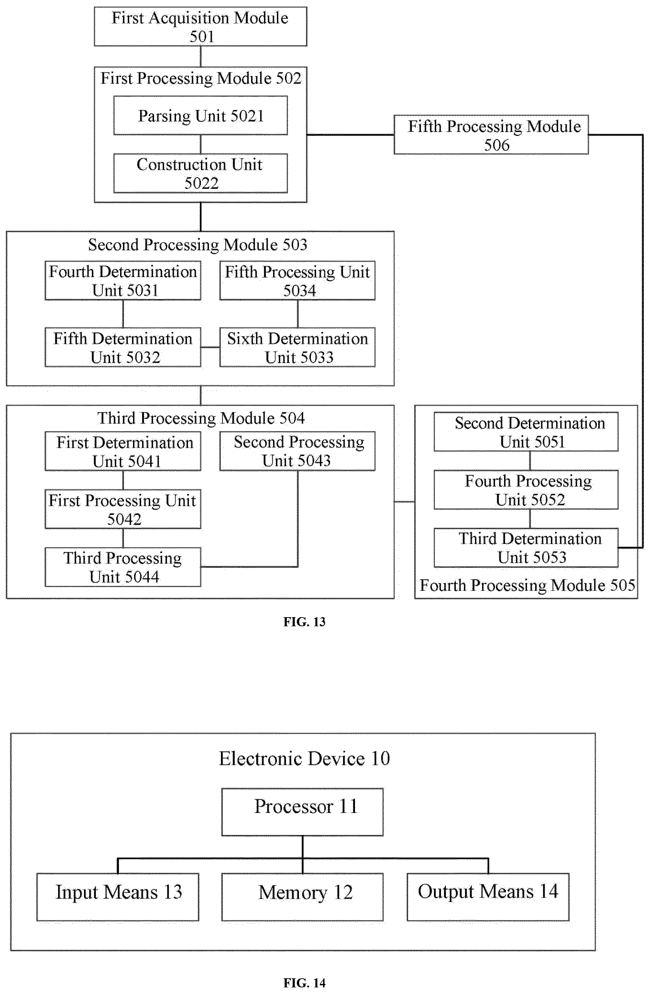

FIG. 13 is a schematic diagram of a structure of an apparatus for compiling a neural network model according to an exemplary embodiment of this disclosure.

In an optional embodiment, the third processing module 504 includes: a first determination unit 5041, a first processing unit 5042, a second processing unit 5043, and a third processing unit 5044.

The first determination unit 5041 is configured to determine, based on a preset rule, computational priorities corresponding respectively to the respective target computation sub-graphs.

The first processing unit 5042 is configured to establish, based on the computational priorities corresponding respectively to the respective target computation sub-graphs, a first dependency edge between corresponding identical operator nodes in any adjacent two of the target computation sub-graphs, the first dependency edge pointing from an operator node in a first target computation sub-graph of a higher computational priority to an operator node in a second target computation sub-graph of a lower computational priority between the any adjacent two target computation sub-graphs.

The second processing unit 5043 is configured to establish, for any one of the target computation sub-graphs, second dependency edges between respective the operator nodes in the target computation sub-graph based on preset computational logic between the respective operator nodes in the target computation sub-graph.

The third processing unit 5044 is configured to determine the first dependency graph based on the respective target computation sub-graphs, the first dependency edge between the corresponding identical operator nodes in the any adjacent two target computation sub-graphs, and second dependency edges between respective operator nodes in each of the target computation sub-graphs.

In an optional embodiment, the third processing unit 5044 is specifically configured to:
determine, based on a preset weight rule, first weights corresponding respectively to the respective first dependency edges between the respective target computation sub-graphs, and second weights corresponding respectively to the respective second dependency edges inside each of the target computation sub-graphs; determine node weights of the respective operator nodes based on the first weights corresponding respectively to the respective first dependency edges and the second weights corresponding respectively to the respective second dependency edges, the node weights representing computational priorities of the respective operator nodes; and determine the first dependency graph based on the respective target computation sub-graphs, the respective first dependency edges, the first weights corresponding respectively to the respective first dependency edges, the respective second dependency edges, the second weights corresponding respectively to the respective second dependency edges, and the respective node weights.

In an optional embodiment, the fourth processing module 505 includes: a second determination unit 5051, a fourth processing unit 5052, and a third determination unit 5053.

The second determination unit 5051 is configured to determine, for each of the second computation sub-graphs, a scheduling sliding window corresponding to the second computation sub-graph, based on a first dependency graph corresponding to the second computation sub-graph, the scheduling sliding window being configured to accommodate a second number of the target computation sub-graphs.

The fourth processing unit 5052 is configured to generate, based on the first dependency graph and the scheduling sliding window corresponding to the second computation sub-graph, a first instruction sequence corresponding to the second computation sub-graph.

The third determination unit 5053 is configured to determine the target instruction sequence based on the first instruction sequences corresponding respectively to the respective second computation sub-graphs.

In an optional embodiment, the apparatus according to embodiments of this disclosure further includes: a fifth processing module 506, configured to generate, for a third computation sub-graph among the respective first computation sub-graphs other than the respective second computation sub-graphs, second instruction sequences corresponding respectively to the respective third computation sub-graphs based on the respective third computation sub-graphs.

The third determination unit 5053 is specifically configured to: determine the target instruction sequence based on the first instruction sequences corresponding respectively to the respective second computation sub-graphs and the second instruction sequences corresponding respectively to the respective third computation sub-graphs.

In an optional embodiment, the first processing module 502 includes: a parsing unit 5021 and a construction unit 5022.

The parsing unit 5021 is configured to parse the neural network model to be compiled, to obtain a parsing result.

The construction unit 5022 is configured to construct, based on the parsing result, the initial computation graph corresponding to the neural network model to be compiled.

In an optional embodiment, the second processing module 503 includes: a fourth determination unit 5031, a fifth determination unit 5032, a sixth determination unit 5033, and a fifth processing unit 5034.

The fourth determination unit 5031 is configured to determine the second computation sub-graph based on a preset matching rule.

The fifth determination unit 5032 is configured to determine, based on the preset operator node, an operation type corresponding to the second computation sub-graph.

The sixth determination unit 5033 is configured to determine a target partitioning rule based on the operation type corresponding to the second computation sub-graph.

The fifth processing unit 5034 is configured to partition, based on the target partitioning rule and a first input tensor and a second input tensor for the second computation sub-graph, the second computation sub-graph into the first number of target computation sub-graphs.

A module as well as a unit in embodiments of this disclosure further may be divided at finer granularity as needed, which specifically may be set as needed.

For beneficial technical effects corresponding to the exemplary embodiments of this apparatus, one may refer to the respective beneficial technical effects in the "Exemplary Method" section described above, which are not repeated here.

### Exemplary Electronic Device

FIG. 14 is a schematic diagram of a structure of an application embodiment of an electronic device according to this disclosure. In this embodiment, the electronic device 10 includes one or more processors 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 11 may execute one or more of the program instructions to implement the method according to the various embodiments of this disclosure that are described above and/or other desired functions.

In an example, the electronic device 10 may further include an input means 13 and an output means 14. These components are connected to each other through a bus system and/or another form of connection mechanism (not shown).

In addition, the input means 13 may further include, for example, a keyboard and a mouse.

The output means 14 may output various information to the outside, and may include, for example, a display, a speaker, a printer, a communication network, and a remote output means connected to the communication network.

Certainly, for simplicity, FIG. 14 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary Method" section of this specification.

The computer program product may be program code, written with one or any combination of a plurality of programming languages, which is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary Method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for compiling a neural network model, comprising:
acquiring a neural network model to be compiled;
determining, based on the neural network model to be compiled, an initial computation graph corresponding to the neural network model to be compiled, wherein the initial computation graph comprises one or more first computation sub-graphs each including one or more operator nodes and connection relationships between the respective operator nodes;
determining, from the respective first computation sub-graphs, a second computation sub-graph including a preset operator node, and partitioning, based on an input tensor for the second computation sub-graph, the second computation sub-graph into a first number of target computation sub-graphs;
establishing, based on a preset dependency rule, dependency relationships between the first number of target computation sub-graphs, to obtain a first dependency graph corresponding to the second computation sub-graph, the dependency relationship representing a computation order among the target computation sub-graphs; and
generating, based on the first dependency graphs corresponding respectively to the respective second computation sub-graphs, a target instruction sequence corresponding to the neural network model to be compiled.

2. The method according to claim 1, wherein the establishing, based on a preset dependency rule, dependency relationships between the first number of target computation sub-graphs, to obtain a first dependency graph corresponding to the second computation sub-graph comprises:
determining, based on a preset rule, computational priorities corresponding respectively to the respective target computation sub-graphs;
establishing, based on the computational priorities corresponding respectively to the respective target computation sub-graphs, a first dependency edge between corresponding identical operator nodes in any adjacent two of the target computation sub-graphs, the first dependency edge pointing from an operator node in a first target computation sub-graph of a higher computational priority to an operator node in a second target computation sub-graph of a lower computational priority between the any adjacent two target computation sub-graphs;
establishing, for any one of the target computation sub-graphs, second dependency edges between respective operator nodes in the target computation sub-graph based on preset computational logic between the respective operator nodes in the target computation sub-graph; and
determining the first dependency graph based on the respective target computation sub-graphs, the first dependency edge between the corresponding identical operator nodes in the any adjacent two target computation sub-graphs, and second dependency edges between respective operator nodes in each of the target computation sub-graphs.

3. The method according to claim 2, wherein the determining the first dependency graph based on the respective target computation sub-graphs, the first dependency edge between the corresponding identical operator nodes in the any adjacent two target computation sub-graphs, and second dependency edges between respective operator nodes in each of the target computation sub-graphs comprises:
determining, based on a preset weight rule, first weights corresponding respectively to the respective first dependency edges between the respective target computation sub-graphs, and second weights corresponding respectively to the respective second dependency edges inside each of the target computation sub-graphs;
determining node weights of the respective operator nodes based on the first weights corresponding respectively to the respective first dependency edges and the second weights corresponding respectively to the respective second dependency edges, the node weights representing computational priorities of the respective operator nodes; and
determining the first dependency graph based on the respective target computation sub-graphs, the respective first dependency edges, the first weights corresponding respectively to the respective first dependency edges, the respective second dependency edges, the second weights corresponding respectively to the respective second dependency edges, and the respective node weights.

4. The method according to claim 3, wherein the generating, based on the first dependency graphs corresponding respectively to the respective second computation sub-graphs, a target instruction sequence corresponding to the neural network model to be compiled comprises:
determining, for each of the second computation sub-graphs, a scheduling sliding window corresponding to the second computation sub-graph, based on a first dependency graph corresponding to the second computation sub-graph, the scheduling sliding window being configured to accommodate a second number of the target computation sub-graphs;
generating, based on the first dependency graph and the scheduling sliding window corresponding to the second computation sub-graph, a first instruction sequence corresponding to the second computation sub-graph; and
determining the target instruction sequence based on the first instruction sequences corresponding respectively to the respective second computation sub-graphs.

5. The method according to claim 4, further comprising: after the determining, based on the neural network model to be compiled, an initial computation graph corresponding to the neural network model to be compiled,
generating, for a third computation sub-graph among the respective first computation sub-graphs other than the respective second computation sub-graphs, second instruction sequences corresponding respectively to the respective third computation sub-graphs based on the respective third computation sub-graphs,
wherein the determining the target instruction sequence based on the first instruction sequences corresponding respectively to the respective second computation sub-graphs comprises:
determining the target instruction sequence based on the first instruction sequences corresponding respectively to the respective second computation sub-graphs and the second instruction sequences corresponding respectively to the respective third computation sub-graphs.

6. The method according to claim 1, wherein the determining, based on the neural network model to be compiled, an initial computation graph corresponding to the neural network model to be compiled comprises:
parsing the neural network model to be compiled, to obtain a parsing result; and
constructing, based on the parsing result, the initial computation graph corresponding to the neural network model to be compiled.

7. The method according to any one of claims 1-6, wherein the determining, from the respective first computation sub-graphs, a second computation sub-graph including a preset operator node, and partitioning, based on an input tensor for the second computation sub-graph, the second computation sub-graph into a first number of target computation sub-graphs comprises:
determining the second computation sub-graph based on a preset matching rule;
determining, based on the preset operator node, an operation type corresponding to the second computation sub-graph;
determining a target partitioning rule based on the operation type corresponding to the second computation sub-graph; and
partitioning, based on the target partitioning rule and a first input tensor and a second input tensor for the second computation sub-graph, the second computation sub-graph into the first number of target computation sub-graphs.

8. An apparatus for compiling a neural network model, comprising:
a first acquisition module, configured to acquire a neural network model to be compiled;
a first processing module, configured to determine, based on the neural network model to be compiled, an initial computation graph corresponding to the neural network model to be compiled, wherein the initial computation graph comprises one or more first computation sub-graphs each including one or more operator nodes and connection relationships between the respective operator nodes;
a second processing module, configured to: determine, from the respective first computation sub-graphs, a second computation sub-graph including a preset operator node; and partition, based on an input tensor for the second computation sub-graph, the second computation sub-graph into a first number of target computation sub-graphs;
a third processing module, configured to establish, based on a preset dependency rule, dependency relationships between the first number of target computation sub-graphs, to obtain a first dependency graph corresponding to the second computation sub-graph, the dependency relationship representing a computation order among the target computation sub-graphs; and
a fourth processing module, configured to generate, based on the first dependency graphs corresponding respectively to the respective second computation sub-graphs, a target instruction sequence corresponding to the neural network model to be compiled.

9. A computer readable storage medium, on which a computer program is stored, wherein the computer program is configured for implementing the method according to any one of claims 1-7.

10. An electronic device, comprising:
a processor; and
a memory, configured to store processor-executable instructions, wherein
the processor is configured to read the executable instructions from the memory, and execute the instructions to implement the method according to any one of claims 1-7.
